# EUROPEAN PATENT APPLICATION

(11) **EP 2 787 432 A1**
(43) Date of publication of application: **08.10.2014**
(21) Application number: 12854408.7
(22) Date of filing: 30.08.2012
(51) Int. Cl.: G06F 9/44

(54) **PORTABLE MULTIMEDIA DEVICE AND OPERATING METHOD THEREFOR**

(30) Priority: 30.11.2011 CN 201110390953
(71) Applicant: Shanghai Actions Semiconductor Co., Ltd., Shanghai 201203 (CN)
(72) Inventor: WANG, Yanwu, Zhuhai Guangdong 519085 (CN); YAO, Shutai, Zhuhai Guangdong 519085 (CN)
(74) Representative: Ferreccio, Rinaldo
(86) International application number: PCT/CN2012/080767
(87) International publication number: WO 2013/078891

(57) **Abstract**

Disclosed are a portable multimedia device and an operating method therefor. The portable multimedia device comprises a Flash decoder and a system function decoder. The operating method comprises: a Flash decoder parsing a loaded swf application compiled by using a Flash development tool, and presenting a Flash interactive interface, the swf application comprising a script function for implementing different device operations; in a parsing procedure, determining a script function required to be invoked, and when the script function required to be invoked has an expanded script function identifier, determining the script function required to be invoked as an expanded script function; according to set correspondence between an expanded script function and a function pointer, determining a function pointer corresponding to the script function required to be invoked, different function pointers pointing to different system functions; and triggering a system function decoder to invoke and execute a system function to which the determined function pointer points, thereby implementing a device operation. This disclosure supports an application implementing a full flash interactive interface, provides a high-quality interactive movement sense, and improves user experience.

## Description

The present application claims priority to Chinese Patent Application No. 201110390953.X, filed with the Chinese Patent Office on November 30, 2011 and entitled "Portable multimedia device and operating method therefor", which is hereby incorporated by reference in its entirety.

### Field of the Invention

The present invention relates to the field of multimedia devices and particularly to a portable multimedia device and a method of operating the same.

### Background of the Invention

Along with increasingly enhanced processing power in hardware of a portable multimedia system, there are an increasing number of application functions of a portable product ranging from an initial music player to a video player and further to a notebook, a calendar, game, instant communication, etc. In the meantime, a consumer is not simply satisfied with a demand for the functions any longer but imposes a higher requirement on a User Interface (UI) by highlighting a good user experience. For example, IPhone available from Apple Inc. has been a great success due to its colorful graphic interface and abundant special effects of the UI.

The majority of webpage animations are implemented in the Flash technology. Flash is an interactive vector animation technology available from Adobe Inc., in the programming language of ActionScript (simply "AS"), where an AS script is developed by a Flash development tool, and finally a swf file is output. The swf file is a file in the binary format including script functions, user interface elements and other interface display resources, where a script function, referred to as an AS function, is configured to perform user interaction and animation, application logic control, etc., and apparently the AS function can embody specific logic control; and a user interface element is configured to present an elementary graphic element in a user interface, e.g., a mouse arrow, a display frame, etc.

Thus when a user opens a webpage at a client, firstly a browser will download a swf file dynamically from a server, and then a Flash decoder (.ocx control) plug-in of the client plays the downloaded swf file, where the process of downloading and playing the swf file is a process in which an AS function logically controls a user interface element, thereby presenting a Flash animation.

It is very easy to develop an exquisite Flash animation by a Flash development tool. Along with time and functional evolvements and differences in processing power of hardware, several different standards about the Flash technology has emerged, and Flash in different versions has different functions in AS function libraries, where the functions are increasingly powerful in a higher version, as depicted in Table 1:

**Table 1 Flash Technology Standards**

| Flash version (swf file version) | ActionScript (AS) version (script syntax and function library) | Note |
|---|---|---|
| Flash 5 and below | AS 1.0 | 1) Typically available on PCs |
| | | 2) Support of limited AS functions |
| Flash 6∼8 | AS 2.0 | 1) Typically available on PCs |
| | | 2) Support of Abundant AS functions and class libraries |
| Flash 9∼10 | AS 3.0 | 1) Typically available on PCs |
| | | 2) Abundant function libraries in the AS language |
| Flash lite 1.x | AS 1.0 | 1) Available to mobile phone animations |
| | | 2) Simplified version of Flash 4 |
| Flash lite 2.0 | AS 2.0 | 1) Available to mobile phone animations |
| | | 2) Simplified version of Flash 7 |

A Flash animation was originally oriented to facilitating propagation over the Internet, so the Cross-platform capability and the security were predominant factors under consideration. For the sake of the Cross-platform capability, the Flash technology is focused on an animation implementation; and for the sake of the security, an AS script is prevented from an access to the majority of local software and hardware resources, e.g., a local file, local hardware (other than standard webcam program), etc. The function Fscommand in the Flash lite can only control several limited functions of a backlight, a full screen, etc.

Thus the Flash technology on a portable device is typically available to non-interactive applications, e.g., playing a Flash animation, playing a Flash video, but Flash applications are infrequently available.

However for a portable platform, Flash applications are typically stored in local system firmware, so there is no security concern. Furthermore, a portable product is customized in terms of both software and hardware to maximize a cost performance, so a Flash decoder has to be modified for an access to hardware of the portable platform.

Existing Flash decoders are generally available from Adobe Inc., so these Flash decoders are customized primarily for mobile phones with low processing power and support a lower Flash version, e.g., Flash lite 1.x commonly used on the mobile phones, so the following problems arise.

1) A standard Flash decoder supports a very limited AS function library, for example, where a file access system, a media file management function, etc., are absent, so it is very difficult to build a complex interactive application.

2) No source code of a Flash decoder is available from Adobe Inc., and no AS function library can be extended. Although communication of a Flash decoder (activex control or JavaScript) with an AS script can be performed through the ExternalInterface in a PC environment, it is firstly limited to the security mechanism and secondly only available in the PC environment. Moreover no efficient connection with operating system software and hardware can be established at the AS script layer through the ExternalInterface.

Apparently in the prior art, only a part but not all of interfaces on a portable multimedia device can be implemented by a Flash UI, and also a set of mechanism is absent for convenient extension of an AS function library.

### Summary of the Invention

The invention provides a portable multimedia device and a method of operating the same so as to implement an application with an all-Flash interactive interface, provide a high-quality interactive animated UI and improve a user experience.

The invention provides a method of operating a portable multimedia device including a Flash decoder and a system function decoder, the method including:
parsing, by the Flash decoder, a loaded swf application programmed by a Flash development tool to present a Flash interactive interface, wherein the swf application includes script functions for performing different device operations, and user interface elements;
determining, by the Flash decoder, a script function, which needs to be invoked, as an extended script function upon determining in the course of parsing that the script function needs to be invoked and there is an extended script function identifier of the script function to be invoked;
determining, by the Flash decoder, a function pointer corresponding to the script function to be invoked according to a preset correspondence relationship between the extended script function and the function pointer, wherein a different function pointer points to a different system function programmed in a different programming language from a non-extended script function; and
triggering, by the Flash decoder, the system function decoder to invoke and execute the system function to which the determined function pointer points, to perform a device operation.

The invention provides a portable multimedia device including a Flash decoder and a system function decoder, the Flash decoder including:
a parsing unit configured to parse a loaded swf application programmed by a Flash development tool to present a Flash interactive interface, wherein the swf application includes script functions for performing different device operations, and user interface elements;
a function type determining unit configured to determine a script function, which needs to be invoked, as an extended script function upon determining in the course of parsing that the script function needs to be invoked and there is an extended script function identifier of the script function to be invoked;
a pointer determining unit configured to determine a function pointer corresponding to the script function to be invoked according to a preset correspondence relationship between the extended script function and the function pointer, wherein a different function pointer points to a different system function programmed in a different programming language from a non-extended script function; and
a function invoking unit configured to trigger the system function decoder to invoke and execute the system function to which the determined function pointer points, to perform a device operation.

The invention has the following advantageous effects: since functions in the system programming language can be invoked through swf applications, all of operations on the device can be performed to thereby support an implementation of an interface in an all-Flash UI application; and the invention enables a script function extension mechanism to provide abundant extended script functions so that a developer can customize quickly an application corresponding to a new script file.

### Brief Description of the Drawings

Fig.1 is a flow chart of a method of operating a portable multimedia device according to an embodiment of the invention;
Fig.2 is an architectural diagram of software of a portable player according to an embodiment of the invention;
Fig.3 is a flow chart of loading a swf application according to an embodiment of the invention;
Fig.4 is a flow chart of loading a swf file to implement an all-Flash interactive interface according to an embodiment of the invention; and
Fig.5 is a structural diagram of a Flash decoder in a portable multimedia device according to an embodiment of the invention.

### Detailed Description of the Embodiments

A portable multimedia device and a method of operating the same according to the invention will be described below in further details with reference to the drawings and embodiments thereof.

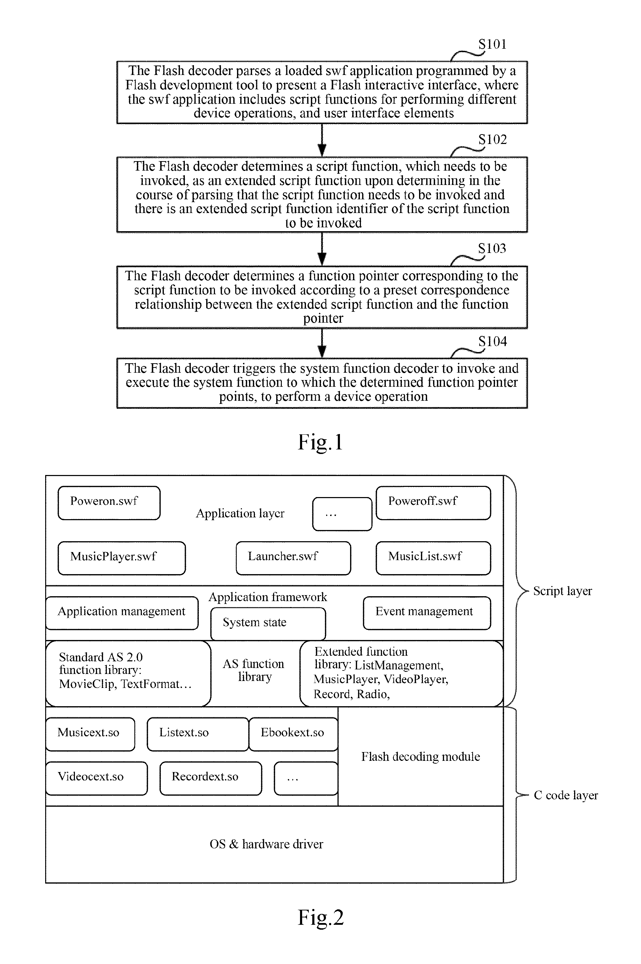

The invention provides a method of operating a portable multimedia device including a Flash decoder and a system function decoder, and as illustrated in Fig.1, the method includes the following steps.

In the step S101, the Flash decoder parses a loaded swf application programmed by a Flash development tool to present a Flash interactive interface, where the swf application includes script functions for performing different device operations, and user interface elements.

A file in which the swf application is stored is a swf file, and the script functions included in the swf file are AS functions which can perform logic control on the user interface elements, so the interface presented by parsing the swf application is a Flash interactive interface.

In the step S102, the Flash decoder determines a script function, which needs to be invoked, as an extended script function upon determining in the course of parsing that the script function needs to be invoked and there is an extended script function identifier of the script function to be invoked.

If the Flash decoder obtains the name of a script function in the course of parsing the swf application, then the script function is determined to be invoked, and in the embodiment of the invention, a script function added to an existing standard AS function library is referred to as an extended script function, i.e., an extended AS function, and the newly added extended AS function is identified, and a non-extended script function is a script function in the standard AS function library.

In the step S103, the Flash decoder determines a function pointer corresponding to the script function to be invoked according to a preset correspondence relationship between the extended script function and the function pointer, where a different function pointer points to a different system function programmed by a different programming language from a non-extended script function.

The non-extended script function is a script function in the standard AS function library, and the existing non-extended script function is programmed in a Flash programming language, e.g., ActionScript (simply "AS"), and the system function is programmed by a system programming language. The system function here refers to a function for an operating system of the portable multimedia device, so an effect of the extended script function is actually realized by the system function. A driver of the device and the operating system are typically programmed in C codes, and also the majority of function layers, e.g., a database, media playing list management, etc., are programmed in C codes. Preferably the system function here refers to a C function programmed in C codes, and of course, can alternatively be a function programmed in another programming language, and in the embodiment of the invention, the correspondence relationship between the extended script function and the function pointer is set in advance, so there is a created valid linkage of a script layer to a C code layer.

In the step S104, the Flash decoder triggers the system function decoder to invoke and execute the system function to which the determined function pointer points, to perform a device operation.

In the embodiment of the invention, the script function added to the existing standard AS function library is referred to the extended script function, and it is only necessary to add the name of the extended script function to the AS function library, and the effect of the extended script function is realized by the system function, and the correspondence relationship between the name of the extended script function and the function is created to thereby trigger the system function decoder to invoke the system function to perform the function of the extended script function.

In the embodiment of the invention, in order to address the problem of failing to perform a device operation via a Flash interactive interface due to functionally limited standard AS functions by which no underlying software or hardware resource of an operating system can be operated, there is provided a method of performing a device operation via an interactive interface, particularly by providing an AS function extension mechanism, supplementing a new AS function and creating a valid linkage of a script layer to software at the operating system layer, so that the presentation of any interface can be supported by executing a swf application to thereby provide a high-quality interactive animated UI and improve a user experience without adding decoding functions of the standard Flash decoder and modifying standard AS functions.

Preferably the Flash decoder directly invokes and executes the script function to be invoked upon determining that there is no extended script function identifier of the script function to be invoked, which indicates that the script function is a script function well programmed in the AS programming language to perform a corresponding operation.

That is, for AS functions in the existing standard AS function library, since these AS functions are embodied in the AS programming language, the Flash decoder can directly invoke and execute the AS functions in the standard AS function library.

A preferred embodiment of the invention will be given below by way of an example in which the Flash programming language is ActionScript (simply "AS"), the script function is an AS function, the system programming language is C codes and the portable multimedia device is a portable multimedia player.

In the embodiment of the invention, the portable multimedia player presents all of interfaces in the Flash technology and can support a device operation, particularly by performing application logic control on the device in an AS function. An all-Flash UI function is implemented on the portable multimedia player, that is, all of interface-enabled application functions starting from a power-on animation are performed in the Flash technology, and the presentation of each interface corresponds to one or more swf applications; furthermore, for the sake of convenient further software development of the portable multimedia player, a software development kit (SDK) is provided publicly, and with the SDK, a new AS script interface can be defined and a new swf application can be developed conveniently.

In the embodiment of the invention, a script function without an extended script function identifier is an AS function compliant with the specifications of Flash 7.0, AS 2.0, among others, and in order to implement all of interfaces in a swf application, an extended script function with a name compliant with the specifications of Flash 7.0 and AS 2.0 is added, and the name of the extended script function points to a system function by a function pointer. Of course, in the embodiment of the invention, the script function without an extended script function identifier complies with the forgoing specifications but will not be limited thereto and can also be an AS function in a Flash script function specification in another version, e.g., any other version applicable to a portable multimedia device in Table 1, etc.

In the embodiment of the invention, the portable multimedia device supports an implementation of a Flash decoding module responsible for parsing a swf application and executing an AS function. The Flash decoding module supports the specifications of Flash 7.0 and AS 2.0 and can be compatible with a swf file produced by a swf producing tool on a PC.

In order to invoke at the AS script layer a function in the system C code layer, an implementation of the invention adopts the following mechanisms.
1) The name of an extended script function and its corresponding function pointer are stored in the form of an array.
   Specifically, an array SwfdecExtFunction is defined in C codes, where a first item in the array is the name of the new extended AS function and a second item in the array is a C function pointer.

   ```
          const SwfdecExtFunction functions[] =
          {
          {"open_list", swfdec_open_list} //Open file list
          {"close_list", swfdec_close_list} //Close file list
          {"list_control", swfdec_list_control} //Manage file list
          {"music_open", swfdec_music_open} //Open music
          {"music_close", swfdec_music_close} //Close music
          {"xxx ", xxx}
```
2) After the portable multimedia player is powered on, the Flash decoding module is loaded, and when the Flash decoding module is initialized, the array SwfdecExtFunction is transferred to the Flash decoding module.
3) The C function pointer pointing to a C function is added respectively in a dynamic library of C codes to thereby create an interface via which the Flash decoder accesses and invokes a function at the C code layer (a system function decoder).

Thus the Flash decoding module needs to invoke the extended AS function at the AS script layer, e.g., Ext.open_list while parsing a swf application, and since the AS function has an extended script function identifier Ext, the Flash decoding module will search the array SwfdecExtFunction for the corresponding C function pointer, and with the found C function pointer, invokes and executes the C function to which it points, where the C function is finally compiled into machine codes, and its parsing and execution is controlled by the system function decoder coming with the operating system, and a return value reflecting an execution result is returned to the As script layer at the end of execution, so that the Flash decoder obtains a parsing result.

For a standard AS function, it is stored in the standard AS function library, and for the name of an extended AS function, it is stored in the extended AS function library, and in the embodiment of the invention, all of AS functions are categorized according to function feature into different classes and stored in the AS function libraries. The existing standard AS function library has categorized the AS functions into different AS classes according to function feature, and in the embedment of the invention, in order to facilitate development of an application, some new classes are defined for the names of added extended AS functions, and specifically the following extended AS classes are defined according to software and hardware features of the portable multimedia device as depicted in Table 2.

**Table 2 Extended AS Classes**

| Class name | Function description | Usage example |
|---|---|---|
| MusicPlayer | Music playing control | MusicPlayer.open(); MusicPlayer.setPlaylist(l); |
| VideoPlayer | Video playing control | VideoPlayer.open(); VideoPlayer.close() |
| File | File and directory operation | File f = new File; f.open("xx.bin"); |
| ListManagement | Media list management: audio and video files are organized into different lists by different categorization rules, e.g., a directory list, an all-music list, an album list... | 1) Open all-music list 1 |
| | | 2) Transfer the newly opened music list to a music control module for playing |
| Record/Radio/Ebook | Audio recording control, FM radio control, electronic book playing control | |
| sysinfo/usb/photo/ime/dc/dv | System information, USB connection control, picture playing, input method, digital camera, digital video, etc. | |

In the embodiment of the invention, swf applications to perform different functions are stored in the portable multimedia player, and in order to create an all-Flash UI application, an application management mechanism at the script layer needs to be created in addition to an extended AS function and a created valid linkage of the extended AS function to C codes, and in the embodiment of the invention, a swf application initially loaded by the multimedia player is a swf management application configured to manage all of other swf applications than the swf management application. The Flash decoding module presents a Flash interactive interface which is a home application interface while parsing the initially loaded swf management application; and thereafter in response to an input by the user at the Flash interactive interface, the Flash decoder loads or unloads another swf application and manages a visible area of the screen for the another swf application through parsing the swf management application to update the Flash interactive interface.

Fig.2 illustrates an architectural diagram of software of the portable multimedia player, generally including the AS script layer and the C code layer from top to bottom, and there is a top-to-bottom invoking relation in operation, that is, the AS script layer invokes the C code layer.

The swf management application is also a swf application and acts as an Applications Framework to manage all the other swf applications at the application layer, and the swf management application includes application management for loading and unloading a swf application at the application layer, a swf application System State for managing a system state and a swf application Event Management for event management.

The AS function libraries include the standard AS 2.0 function library and the extended AS function library, and among the swf applications at the application layer, there are poweron.swf for a power-on animation, poweroff.swf for a power-off animation, MusicPlayer.swf for playing music, MusicList.swf for managing a music list and Launcher.swf for a home application interface.

The C code layer includes the Flash decoding module, a library file with the suffix .so programmed in C codes, and the operating system OS and hardware drivers.

The swf management application is configured to manage all the other swf applications at the application layer in the software system of the multimedia player, so that it will be simple to subsequently add a new application function, thus facilitating development by a third party. For an operating mechanism of the swf management application, the embodiment of the invention preferably adopts the following implementation.
1) All the other swf applications in the software system of the multimedia player are under the control of the swf management application. The swf management application is also a swf application, and firstly the swf management application is loaded after the entire system is started. Subsequently a load interface of the swf management application is requested for loading another new swf application; and the swf management application may record all of information about other currently loaded swf applications.
2) Primary functions of the swf management application include loading and unloading other swf applications, management of visible areas of the screen for the other swf applications, lifecycle management of the other swf applications and management of an asynchronous event of the system.
3) In order to management the other swf applications, each other swf application provides five communication interfaces to the outside: an initialization interface for initialization, an execution start interface, a notification interface for notifying of an event, an execution pause interface and an execution resumption interface, and the swf management application may invoke these interfaces as appropriate, for example, upon an input by the user at the interactive interface.

The swf management application manages a visible area of the screen in the following mechanism.

The swf management application arranges loaded swf applications in a stack so that a newly loaded swf application is at the top of the stack, and the visible area of the screen for the swf application at the top of the stack overlies displays of the swf applications below the top of the stack in the visible area of the screen.

The swf management application recalculates the visible area of the screen for each swf application each time a swf application is loaded or unloaded; the swf management application pauses execution of a swf application, for example, by invoking the execution pause interface of the swf application, upon determining that the visible area of the screen for the swf application is completely covered; and the swf management application starts execution of a swf application, for example, by invoking the execution start interface of the swf application, upon determining that all of swf applications overlying the visible area of the screen for the swf application are unloaded.

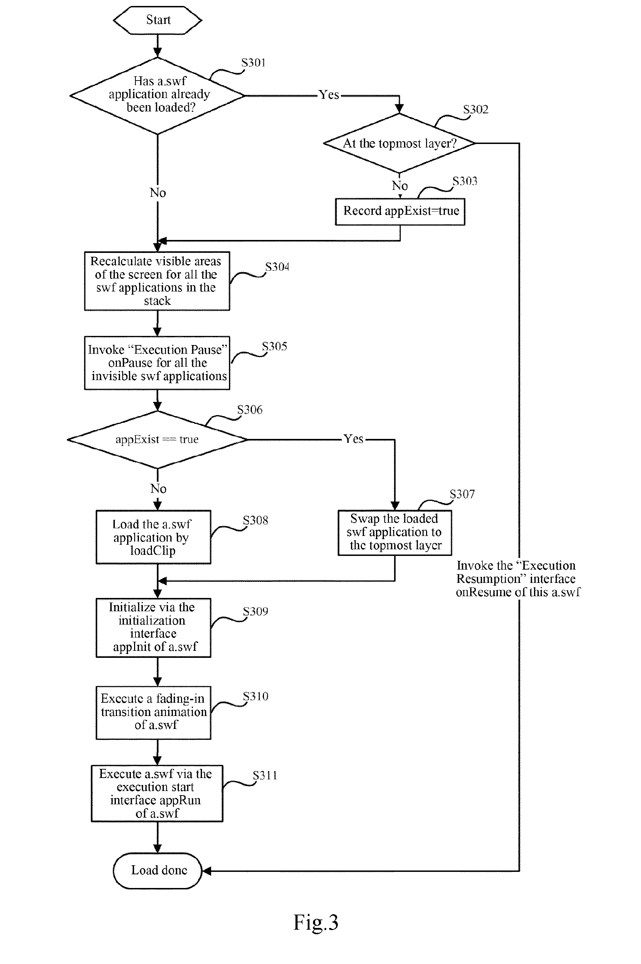

Taking an a.swf application to be loaded as an example, Fig.3 illustrates a flow chart of the swf management application loading a swf application according to the present embodiment, particularly as follows.

In the step S301, the swf management application parsed by the Flash decoder determines whether the a.swf application has been loaded upon determining the a.swf application needs to be invoked, and if so, then the flow proceeds to the step S302; otherwise, the flow proceeds to the step S304.

In the step S302, it is determined whether the a.swf application to be invoked has been located at the topmost layer, i.e., the top of the stack, if not, then it indicates that the a.swf application has been loaded but hidden, and the execution resumption interface of the a.swf application is invoked directly for execution resumption, and the flow proceeds to the step S303; or if so, then the "execution resumption" interface onResume of this a.swf application is invoked for loading.

In the step S303, appExist=true is recoded to indicate that the a.swf application has been loaded.

In the step S304, visible areas of the screen for all the applications in the stack are recalculated, where the swf application at the top of the stack overlies the visible area of the screen for the underlying swf application.

In the step S305, for all the invisible swf applications, the execution pause interfaces are invoked to pause execution of these applications.

In the step S306, it is determined whether appExist is true, and if so, then it indicates that the a.swf application has been loaded, and the flow proceeds to the step S307; otherwise, it indicates the a.swf application has not been loaded, and the flow proceeds to the step S308.

In the step S307, the loaded swf application is swapped to the topmost layer, and the flow proceeds to the step S309 to thereby offer a presentation condition.

In the step S308, the a.swf application is loaded with the loadClip command, and a new video clip object is created for this a.swf application via the standard AS 2.0 interface.

In the step S309, before the a.swf application starts operation, the swf management application has the a.swf application perform some initialization via the initialization interface appInit of the a. swf application.

In the step S310, a fading-in transition animation of the a.swf application is executed.

In the step S311, the swf management application has operation of the a.swf application started via the execution start interface appRun of the a.swf application.

In the embodiment of the invention, the swf management application is configured to manage an asynchronous event of the system as follows: when there is a system event occurring, e.g., a USB line being plugged, power shortage of the system, etc., the swf management application may invoke the "notification" interfaces of all the loaded swf applications. The swf applications invoke corresponding script functions per event type for processing.

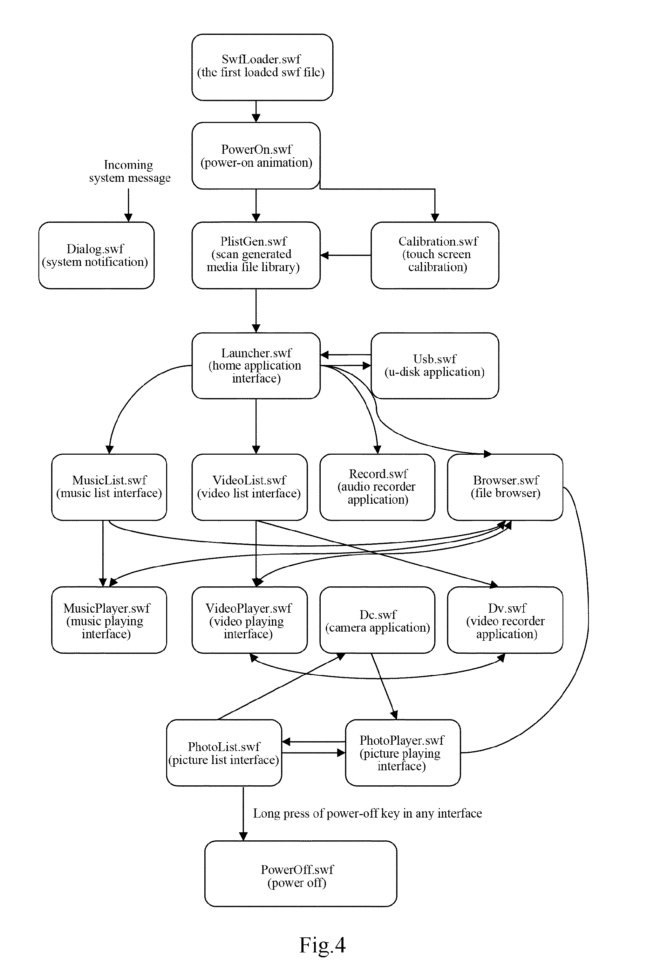

The foregoing AS extension mechanism and swf application framework according to the embodiment of the invention support a full set of usage interfaces of the multimedia player, that is, support an implementation of an all-Flash UI application on the portable multimedia player, and after the portable multimedia player initially loads the swf management application, an Flash interactive interface is presented as a home application interface; and thereafter in response to an input of the user at the Flash interactive interface, the swf management application loads or unloads the other swf applications and manages visible areas of the screen for the other swf applications to update the Flash interactive interface. The other swf applications include a power-on application, a home interface application, a music application, a video application, a recorder application, a radio application, a photo application, an electronic book application, a calendar application, a stopwatch application, a calculator application, a file manager application, a digital camera application, a digital video application, etc. Fig.4 illustrates a flow of loading a swf application after the system is powered on.

In the embodiment of the invention, an all-Flash UI application is implemented on the portable multimedia player, that is, all the applications are developed by an AS function plus a Flash producing tool (Flash Professional 8). Also the AS function extension mechanism is implemented to provide abundant extended AS function so that a developer can custom a new swf application quickly.

The embodiment of the invention provides a high-quality interactive animated UI and improves a user experience; and also with the all-swf-application design, more than 80% of a development effort is done in a PC environment (Flash Professional 8) to thereby improve the development efficiency. With provision of the good swf application management framework, the developer can be enabled to subsequently create a customized new swf application quickly.

Based upon the same inventive idea, an embodiment of the invention further provides an apparatus for performing a device operation via an interactive interface, and since the apparatus addresses the problem under a similar principle to the method of performing a device operation via an interactive interface, reference can be made to the implementation of the method for the implementation of the apparatus, and a repeated description thereof will be omitted here.

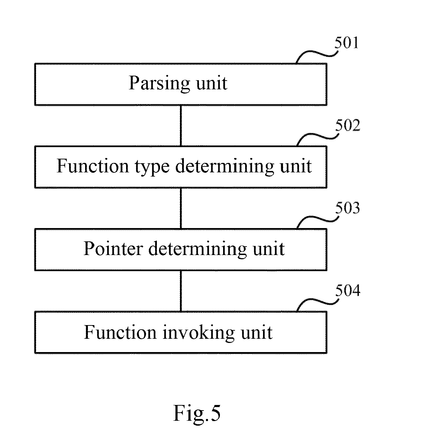

An embodiment of the invention provides a portable multimedia device including a Flash decoder and a system function decoder, and as illustrated in Fig.5, the Flash decoder includes: a parsing unit 501 configured to parse a loaded swf application generated by a Flash development tool to present a Flash interactive interface, where the swf application includes script functions for performing different device operations; a function type determining unit 502 configured to determine a script function, which needs to be invoked, as an extended script function upon determining in the course of parsing that the script function needs to be invoked and there is an extended script function identifier of the script function to be invoked; a pointer determining unit 503 configured to determine a function pointer corresponding to the script function to be invoked according to a preset correspondence relationship between the extended script function and the function pointer, where a different function pointer points to a different system function programmed in a different programming language from a non-extended script function; and a function invoking unit 504 configured to trigger the system function decoder to invoke and execute the system function to which the determined function pointer points, to perform a device operation.

Preferably, the function invoking unit is further configured to directly invoke and execute the script function to be invoked when the function type determining unit determines that there is no extended script function identifier of the script function to be invoked.

Preferably, a swf application initially loaded by the device is a swf management application configured to manage all of other swf applications than the swf management application.

Preferably, the parsing unit presents a Flash interactive interface which is a home application interface while parsing the swf management application initially loaded by the device; and
in response to an input by a user at the Flash interactive interface, the swf management application loads or unloads the other swf applications and manages visible areas of a screen for the other swf applications to update the Flash interactive interface.

Preferably, the swf management application arranges the loaded other swf applications in a stack so that a newly loaded swf application is at the top of the stack, and the visible area of the screen for the swf application at the top of the stack overlies displays of the swf applications below the top of the stack in the visible area of the screen;
the swf management application recalculates the visible area of the screen for each swf application each time another swf application is loaded or unloaded;
the swf management application pauses execution of a swf application upon determining that the visible area of the screen for the swf application is completely covered; and
the swf management application resumes execution of a swf application upon determining that all of swf applications overlying the visible area of the screen for the swf application are unloaded.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, a CD-ROM, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable data processing device provide steps for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

Evidently those skilled in the art can make various modifications and variations to the invention without departing from the scope of the invention. Thus the invention is also intended to encompass these modifications and variations thereto so long as the modifications and variations come into the scope of the claims appended to the invention and their equivalents.

## Claims

1. A method of operating a portable multimedia device including a Flash decoder and a system function decoder, the method comprising:
parsing, by the Flash decoder, a loaded swf application programmed by a Flash development tool to present a Flash interactive interface, wherein the swf application includes script functions for performing different device operations, and user interface elements;
determining, by the Flash decoder, a script function, which needs to be invoked, as an extended script function upon determining in the course of parsing that the script function needs to be invoked and there is an extended script function identifier of the script function to be invoked;
determining, by the Flash decoder, a function pointer corresponding to the script function to be invoked according to a preset correspondence relationship between the extended script function and the function pointer, wherein a different function pointer points to a different system function programmed in a different programming language from a non-extended script function; and
triggering, by the Flash decoder, the system function decoder to invoke and execute the system function to which the determined function pointer points, to perform a device operation.

2. The method according to claim 1, further comprising:
directly invoking and executing, by the Flash decoder, the script function to be invoked upon determining that there is no extended script function identifier of the script function to be invoked.

3. The method according to claim 1 or 2, wherein:
an initially loaded swf application parsed by the Flash decoder is a swf management application configured to manage all of other swf applications than the swf management application.

4. The method according to claim 3, wherein:
the Flash decoder presents a Flash interactive interface which is a home application interface while parsing the initially loaded swf management application; and
in response to an input by a user at the Flash interactive interface, the Flash decoder loads or unloads the other swf applications and manages visible areas of a screen for the other swf applications through the swf management application to update the Flash interactive interface.

5. The method according to claim 4, wherein:
the swf management application arranges the loaded swf applications in a stack so that a newly loaded swf application is at the top of the stack, and the visible area of the screen for the swf application at the top of the stack overlies displays of the swf applications below the top of the stack in the visible area of the screen;
the swf management application recalculates the visible area of the screen for each swf application each time another swf application is loaded or unloaded;
the swf management application pauses execution of a swf application upon determining that the visible area of the screen for the swf application is completely covered; and
the swf management application resumes execution of a swf application upon determining that all of swf applications overlying the visible area of the screen for the swf application are unloaded.

6. The method according to claim 3, wherein:
each swf application other than the swf management application is categorized per function feature performed upon parsing;
the other swf applications parsed by the Flash decoder provide the following interfaces for management by the swf management application:
an initialization interface for initialization, an execution start interface, a notification interface for notifying of an event, an execution pause interface and an execution resumption interface.

7. The method according to claim 1, wherein:
all of extended script functions are categorized per performed function feature into different classes and stored in a script function library.

8. A portable multimedia device comprising a Flash decoder and a system function decoder, the Flash decoder comprising:
a parsing unit configured to parse a loaded swf application programmed by a Flash development tool to present a Flash interactive interface, wherein the swf application includes script functions for performing different device operations, and user interface elements;
a function type determining unit configured to determine a script function, which needs to be invoked, as an extended script function upon determining in the course of parsing that the script function needs to be invoked and there is an extended script function identifier of the script function to be invoked;
a pointer determining unit configured to determine a function pointer corresponding to the script function to be invoked according to a preset correspondence relationship between the extended script function and the function pointer, wherein a different function pointer points to a different system function programmed in a different programming language from a non-extended script function; and
a function invoking unit configured to trigger the system function decoder to invoke and execute the system function to which the determined function pointer points, to perform a device operation.

9. The device according to claim 8, wherein the function type determining unit is further configured to directly invoke and execute the script function to be invoked upon determining that there is no extended script function identifier of the script function to be invoked.

10. The device according to claim 8, wherein an initially loaded swf application is a swf management application configured to manage all of other swf applications than the swf management application.

11. The device according to claim 10, wherein the parsing unit presents a Flash interactive interface which is a home application interface while parsing the initially loaded swf management application; and
in response to an input by a user at the Flash interactive interface, the swf management application loads or unloads the other swf applications and manages visible areas of a screen for the other swf applications to update the Flash interactive interface.

12. The device according to claim 11, wherein the swf management application arranges the loaded swf applications in a stack so that a newly loaded swf application is at the top of the stack, and the visible area of the screen for the swf application at the top of the stack overlies displays of the swf applications below the top of the stack in the visible area of the screen;
the swf management application recalculates the visible area of the screen for each swf application each time another swf application is loaded or unloaded;
the swf management application pauses execution of a swf application upon determining that the visible area of the screen for the swf application is completely covered; and
the swf management application resumes execution of a swf application upon determining that all of swf applications overlying the visible area of the screen for the swf application are unloaded.
